# EUROPÄISCHE PATENTSCHRIFT

(11) **EP 2 583 276 B1**
(45) Veröffentlichungstag und Bekanntmachung des Hinweises auf die Patenterteilung: **06.09.2017**
(21) Anmeldenummer: 11729391.0
(22) Anmeldetag: 07.06.2011
(51) Int. Cl.: G10K 9/22, G01S 7/521

(54) **ULTRASCHALLSENSOR UND FAHRZEUG MIT EINEM DERARTIGEN ULTRASCHALLSENSOR**
ULTRASONIC SENSOR AND VEHICLE WITH SUCH AN ULTRASONIC SENSOR
CAPTEUR ULTRASONORE ET VÉHICULE ÉQUIPÉ D'UN TEL CAPTEUR ULTRASONORE

(30) Priorität: 17.06.2010 DE 102010024205
(43) Veröffentlichungstag der Anmeldung: 24.04.2013
(73) Patentinhaber: Valeo Schalter und Sensoren GmbH, 74321 Bietigheim-Bissingen (DE)
(72) Erfinder: WEHLING, Hans-Wilhelm, 74074 Heilbronn (DE); JUNG, Thomas, 74074 Heilbronn (DE); KUHNLE, Daniel, 74385 Pleidelsheim (DE); FRISCHMANN, Christian, 74343 Sachsenheim (DE)
(86) Internationale Anmeldenummer: PCT/EP2011/059367
(87) Internationale Veröffentlichungsnummer: WO 2011/157594

(56) Entgegenhaltungen:
- DE-A1- 10 137 424
- DE-A1- 19 627 502
- DE-A1-102006 014 053
- DE-A1-102006 026 247

## Beschreibung

Die Erfindung betrifft einen Ultraschallsensor mit einer Membran und einem in der Membran angeordneten Wandlerelement, sowie einen Deckel durch welchen ein Membrangehäuse rückseitig abgedeckt ist. Des Weiteren betrifft die Erfindung auch ein Fahrzeug mit einem derartigen Ultraschallsensor.

Die Verwendung von Ultraschallsensoren für Fahrerassistenzeinrichtungen von Fahrzeugen ist umfänglich bekannt. Derartige Sensoren sind beispielsweise an Stoßfängern des Fahrzeugs angeordnet und zur Detektion der Umgebung des Fahrzeugs ausgebildet. Die durch die Ultraschallsensoren detektierten Informationen können beispielsweise einer Fahrerassistenzeinrichtung, wie einem Parkassistenzsystem, bereitgestellt werden.

Ein derartiger Ultraschallsensor ist beispielsweise aus der DE 10 2006 011 155 A1 bekannt. Das dortige topfförmige Membrangehäuse ist rückseitig durch einen dicken Deckel zum Verschluss des Gehäuses an dem Gehäuse angeklebt. Auch eine Verbindung durch Klipse kann vorgesehen sein. An dem Deckel kann darüber hinaus ein Dämpfungselement zur Schwingungsdämpfung angebracht sein. Der Deckel ist aus Kunststoff ausgebildet.

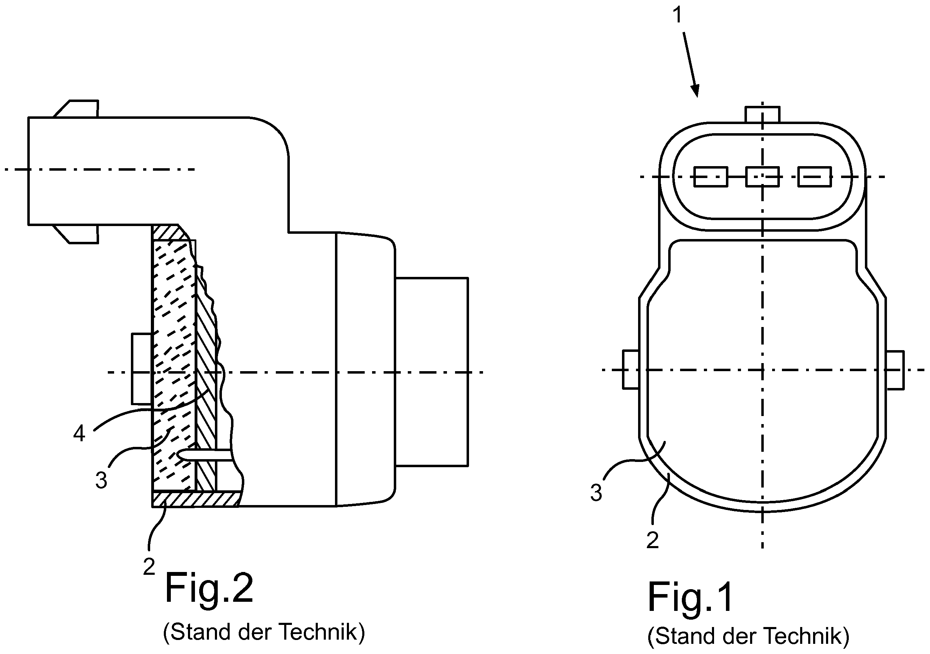

Ein derartiger Ultraschallsensor ist aus der DE 10 2006 026 247 A1 ebenfalls bekannt. Darüber hinaus ist ein Ultraschallsensor bekannt, wie er beispielsweise in Fig. 1 und Fig. 2 gezeigt ist. In Fig. 1 ist der Ultraschallsensor 1 in einer Betrachtung von hinten gezeigt. Der Sensor 1 umfasst ein Gehäuse 2, welches topfförmig ausgebildet ist und die Membran bildet. An der Rückseite ist der Sensor 1 verschlossen, wobei dazu ein Verguss 3 ausgebildet ist.

In Fig. 2 ist in einer Seitendarstellung, die teilweise geschnitten ist, der Ultraschallsensor 1 gemäß Fig. 1 gezeigt. Die Vergussmasse 3 ist zu erkennen, wobei diese bis zu einem Schaltungsträger 4, der sich in dem Hohlraum befindet, ausgebildet ist. Eine derartige Vergießung an der Rückseite des Gehäuses 2 ist aufgrund der Schallabstrahlung nach hinten und den Umweltanforderungen im Stoßfängerbereich erforderlich. Darüber hinaus soll auch die Elektronik gegen Feuchtigkeit und Korrosion geschützt werden. Darüber hinaus ist eine rückseitige Fläche dieses Vergussmaterials 3 nur sehr klein und im Hinblick auf eine mögliche Beschriftung daher nur sehr unzureichend verwendbar.

Darüber hinaus ist diese Beschriftung bei neueren Konstruktionen auch über mehrere Werkstoffe unterschiedliche Farbe aufzubringen, was sehr aufwändig ist.

Es ist Aufgabe der vorliegenden Erfindung, einen Ultraschallsensor sowie ein Fahrzeug mit einem derartigen Ultraschallsensor zu schaffen, welcher bzw. welches im Hinblick auf den rückseitigen Verschluss des Gehäuses verbessert aufgebaut ist.

Diese Aufgabe wird durch einen Ultraschallsensor, welcher die Merkmale nach Anspruch 1 aufweist, und ein Fahrzeug, welches die Merkmale nach Anspruch 14 aufweist, gelöst.

Ein erfindungsgemäßer Ultraschallsensor umfasst eine topfförmige Membran mit einem entsprechenden Membrangehäuse. In der Membran ist ein Wandlerelement angeordnet. Darüber hinaus ist ein Deckel vorgesehen, durch welchen die Membran und somit auch das Gehäuse rückseitig abgedeckt ist. Ein wesentlicher Aspekt der Erfindung besteht darin, dass der Deckel eine Folie ist. Eine derartige Ausgestaltung ermöglicht einen fertigungstechnisch schneller und aufwandsärmer aufgebauten Ultraschallsensor. Darüber hinaus ist gerade diese rückseitige Abdeckung variabler und flexibler ausgestaltbar und verwendbar. Ein dickes Vergussmaterial, welches darüber hinaus auch noch ausgehärtet werden muss, wie zu Fig. 1 und Fig. 2 erläutert wurde, ist daher nicht mehr erforderlich. Darüber hinaus kann durch die Ausgestaltung mit einer Folie auch ein variableres und flexibleres Abdeckkonzept im Vergleich zum Stand der Technik gemäß DE 10 2006 011 155 A1 erreicht werden. Die dort komplexe und aufwändige Ausgestaltung des Deckels, die aufgrund der Durchführungen und sonstigen Aufbaukonzepte sehr dick ausgestaltet wird, ist gemäß der Erfindung nicht erforderlich. Darüber hinaus kann durch die Ausgestaltung des erfindungsgemäßen Ultraschallsensors auch die für die Beschriftung bereitgestellte Fläche deutlich vergrößert werden und die Beschriftung kann aufwandsärmer erfolgen.

Vorzugsweise ist die Folie an die topfförmige Membran angeschweißt, insbesondere durch ein Laserschweißen oder ein Ultraschallschweißen. Dies ermöglicht eine besonders mechanisch stabile Verbindung und darüber hinaus auch ein sehr präzises und positionsgenaues Befestigen.

Vorzugsweise ist die Folie an der Innenseite eines Hohlkörpers der Membran befestigt, insbesondere angeschweißt. Dadurch kann ein sehr bauraumsparendes Konzept realisiert werden, welches darüber hinaus auch eine örtlich ganz spezifische Befestigung gewährleistet, die stabil und vor mechanischen Verschleiß geschützt angeordnet ist.

Vorzugsweise ist vorgesehen, dass die Folie an den Außenrändern einen in axialer Richtung gebogenen Bereich aufweist, dessen Außenseite mit der Innenseite des Hohlkörpers verbunden ist. Die oben genannten Vorteile können dadurch nochmals verbessert werden.

Insbesondere ist vorgesehen, dass diese gebogenen Bereiche axial und nach außen orientiert sind und im zusammengebauten Zustand des Sensors die Seitenränder bündig mit endseitigen Seitenrändern des Hohlkörpers angeordnet sind. Eine derartig quasi versenkte Anordnung der Folie im Innenraum des Hohlkörpers ergibt weitere Verbesserungen im Hinblick auf Bauraum, mechanisch stabile Befestigung und großflächige Verwendung zur Beschriftung der Folie.

Es kann vorgesehen sein, dass die Folie dünner ist als die Wanddicke eines an die Folie angrenzenden Hohlkörpers der topfförmigen Membran. Dadurch kann eine Materialeinsparung erzielt werden und Gewichtsreduzierung des Ultraschallsensors ermöglicht werden. Darüber hinaus ist durch die Folie dennoch ausreichende Stabilität im Hinblick auf eine geeignete rückseitige Abdeckung des Gehäuses gewährleistet.

Es kann vorgesehen sein, dass die Folie aus Kunststoff ausgebildet ist.

In einer vorteilhaften Ausgestaltung ist vorgesehen, dass auf einer Innenseite der Folie ein metallisches Material angeordnet ist. Dadurch kann eine weitere Funktionalität der Folie generiert werden, da sie zusätzlich gleich auch als elektromagnetische Abschirmvorrichtung eingesetzt werden kann.

Es kann vorgesehen sein, dass das metallische Material als Beschichtung aufgebracht ist oder eine metallische Folie, insbesondere eine Kupferfolie vorgesehen ist, die auf die den Deckel darstellende Folie aufgeklebt ist.

Die Beschichtung kann ebenfalls ein Kupfermaterial sein.

In einer weiteren alternativen Ausgestaltung kann vorgesehen sein, dass die Folie als metallisches Bauteil ausgebildet ist, welches vorzugsweise ein tiefgezogenes Bauteil ist. Bei einer derartigen Ausgestaltung ist somit bereits das Grundmaterial der den Deckel darstellenden Folie aus Metall konzipiert und es ist daher keine weitere metallische Beschichtung oder eine zusätzliche weitere metallische Folie mehr erforderlich. Durch einen Tiefziehprozess kann das Bauteil auch relativ einfach und dennoch formpräzise hergestellt werden. Darüber hinaus erreicht es eine besonders hohe Stabilität. Gemäß der Erfindung ist die mit einem metallischen Bereich ausgebildete Folie mit einem Massekontakt eines Schaltungsträgers, der in der topfförmigen Membran angeordnet ist, elektrisch verbunden. Dadurch kann eine besonders vorteilhafte und dennoch hochfunktionelle Ausgestaltung einer Abschirmvorrichtung konzipiert werden. Ein heute bei Ultraschallsensoren verwendetes übliches Abschirmblech ist dadurch nicht mehr erforderlich. Dadurch wird sowohl der Montageaufwand reduziert als auch die Bauteilanzahl reduziert.

Vorzugsweise ist an der Innenseite der Folie ein elektrisches Kontaktelement zur Verbindung mit dem Massekontakt ausgebildet. Insbesondere kann dieses elektrische Kontaktelement gewinkelt ausgebildet sein. Dadurch ist eine besonders einfache und dennoch sichere und dauerhafte elektrische Verbindung gewährleistet. In besonders einfacher und vorteilhafter Weise ist das elektrische Kontaktelement auf den Massekontakt aufgesteckt. Eine derartige Steckverbindung ist montagetechnisch sehr einfach realisierbar und dennoch ist eine hohe mechanische Belastbarkeit gegeben.

Vorzugsweise ist auf der Innenseite der Folie ein Schwingungsdämpfungselement angeordnet. Insbesondere ist dieses daran angeklebt.

Mit der Erfindung oder einer vorteilhaften Ausgestaltung davon wird somit erreicht, dass der Teil der Folie, der für die Dichtheit erforderlich ist, von der Rückseite her auf den Ultraschallsensor vorzugsweise mittels Ultraschall - oder Laserstrahlschweißen dicht aufgeschweißt ist.

Die Folie ist in der Dicke vorzugsweise so zu wählen, dass sie den Anforderungen der Einbausituation gerecht wird. Das gleiche gilt mit der Dicke der bei einer optionalen Ausführungsform vorgesehenen metallischen Folie, nämlich einer elektromagnetischen Abschirmfolie, um den geforderten elektromagnetischen Abschirmschutz zu erreichen.

Die Beschriftung des Ultraschallsensors ist auf dieser als Abdeckung dienenden Folie insbesondere durch einen Laser problemlos möglich. Es steht durch eine derartige Ausgestaltung einer Folie als Abdeckung eine viel größere Fläche zum Beschriften zur Verfügung.

Die Folie kann für unterschiedliche Ultraschallsensortypen unterschiedliche Farben aufweisen, wodurch eine leicht nachvollziehbare Typenkategorisierung möglich ist.

Vorzugsweise ist ein Schwingungsdämpfungselement vorgesehen, welches vorzugsweise auf der Innenseite der Folie angeordnet ist, und insbesondere ein Filzmaterial ist.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die in den Figuren alleine gezeigten Merkmale und Merkmalskombinationen und/oder alleine in der Figurenbeschreibung genannten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
Fig. 1 eine Rückansicht eines aus dem Stand der Technik bekannten Ultraschallensors;
Fig. 2 eine Seitenansicht mit teilweise geschnittener Darstellung des Ultraschallsenors gemäß Fig. 1;
Fig. 3 eine schematische Rückansicht eines Ausführungsbeispiels eines erfindungsgemäßen Ultraschallsensors;
Fig. 4 eine teilweise geschnittene Darstellung einer Seitenansicht des Ultraschallsensors gemäß Fig. 3;
Fig. 5 eine schematische Rückansicht eines weiteren Ausführungsbeispiels eines erfindungsgemäßen Ultraschallsensors;
Fig. 6 eine teilweise geschnittene Darstellung einer Seitenansicht des Ultraschallsensors gemäß Fig. 5:
Fig. 7 eine Rückansicht eines weiteren Ausführungsbeispiels eines erfindungsgemäßen Ultraschallsensors;
Fig. 8 eine teilweise geschnittene Darstellung einer Seitenansicht des Ultraschallsensors gemäß Fig. 7;
Fig. 9 eine schematische Rückansicht eines weiteren Ausführungsbeispiels eines erfindungsgemäßen Ultraschallsensors, und
Fig. 10 eine teilweise geschnittene Darstellung einer Seitenansicht des Ultraschallsensors gemäß Fig. 9.

In den Figuren werden gleiche oder funktionsgleiche Elemente mit den gleichen Bezugszeichen versehen.

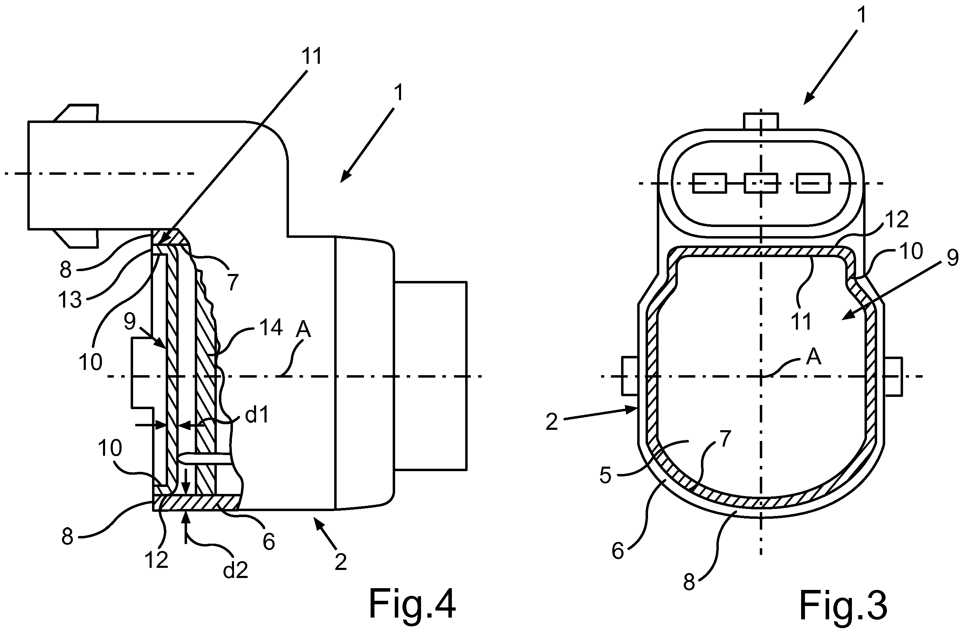

In Fig. 3 ist in einer schematischen Rückansicht ein Ultraschallsensor 1 gezeigt, welcher an einem Kraftfahrzeug angeordnet ist. Der Ultraschallsensor 1 ist beispielsweise an einem Stoßfänger des Fahrzeugs angeordnet und zur Detektion der Umgebung des Fahrzeugs ausgebildet und auch entsprechend angeordnet.

Der Ultraschallsensor 1 umfasst eine topfförmige Membran 2 bzw. ein entsprechendes Membrangehäuse. Dies kann beispielsweise einstückig ausgebildet sein und aus einem metallischen Material, beispielsweise Aluminium, ausgebildet sein.

In einem Hohlraum 5, der durch die topfförmige Membran 2 gebildet ist, ist ein nicht dargestelltes Wandlerelement, beispielsweise ein Piezoelement angeordnet. Dies ist insbesondere an einer Innenseite eines Bodens des Gehäuses bzw. der topfförmigen Membran 2 angebracht, beispielsweise angeklebt.

Die Membran 2 umfasst einen Hohlkörper 6 mit einer Innenseite 7. Der Hohlkörper 6 weist darüber hinaus eine rückseitige Begrenzung in Form des Seitenrands 8 auf.

Zur rückseitigen Abdeckung des Ultraschallsensors 1 ist in dem Hohlkörper 6 eine Folie 9 ausgebildet. Die Folie 9 ist mit nach vorne gebogenen Bereichen 10, die sich axial zur Achse A, welche senkrecht zur Figurenebene verläuft, an der Innenseite 7 befestigt. Dazu sind durch Außenränder 11 der Folie 9 die entsprechenden nach vorne gebogenen Bereiche 10 gebildet, wobei diese gebogenen Bereiche 10 mit den Außenseiten 12 an der Innenseite 7 angeschweißt sind.

In Fig. 4 ist in einer Seitenansicht mit einem Teilschnitt der Ultraschallsensor 1 gezeigt. Wie zu erkennen ist, weist die Folie 9 eine Dicke d1 auf, welche kleiner als eine Dicke d2 der Wand des Hohlkörpers 6 ist. Darüber hinaus ist die Folie 9 so an der Rückseite angeordnet, dass sich die gebogenen Bereiche 10 in axialer Richtung nach hinten erstrecken, so dass die Folie 9 quasi etwas versenkt in dem Hohlraum 5 eingebracht ist. Darüber hinaus ist die Befestigung der Folie 9 an der Innenseite 7 des Hohlkörpers 6 so durchgeführt, dass Seitenränder 13 bündig mit den Seitenrändern 8 angeordnet sind.

Darüber hinaus ist ein Schaltungsträger 14, der in dem Hohlraum 5 angeordnet ist, gezeigt.

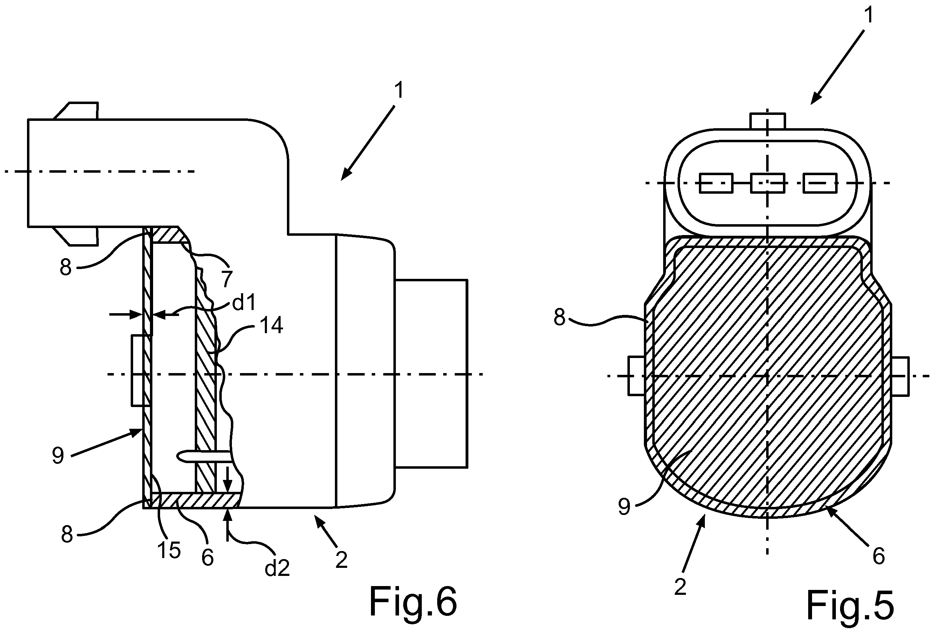

In Fig. 5 ist in einer Rückansicht ein weiteres Ausführungsbeispiel eines Ultraschallsensors 1 gezeigt. Im Unterschied zur Ausgestaltung gemäß Fig. 3 und Fig. 4 ist hier vorgesehen, dass die Folie 9 nicht an einer Innenseite 7 des Hohlkörpers 6 befestigt ist, sondern an der rückseitigen Stirnfläche bzw. den Seitenrändern 8 des Hohlkörpers 6 angebracht ist. Dazu ist eine Innenseite 15 der Folie 9 mit den Seitenrändern 8 verschweißt.

In Fig. 6 ist dazu die Seitenansicht in Teilschnitt gezeigt.

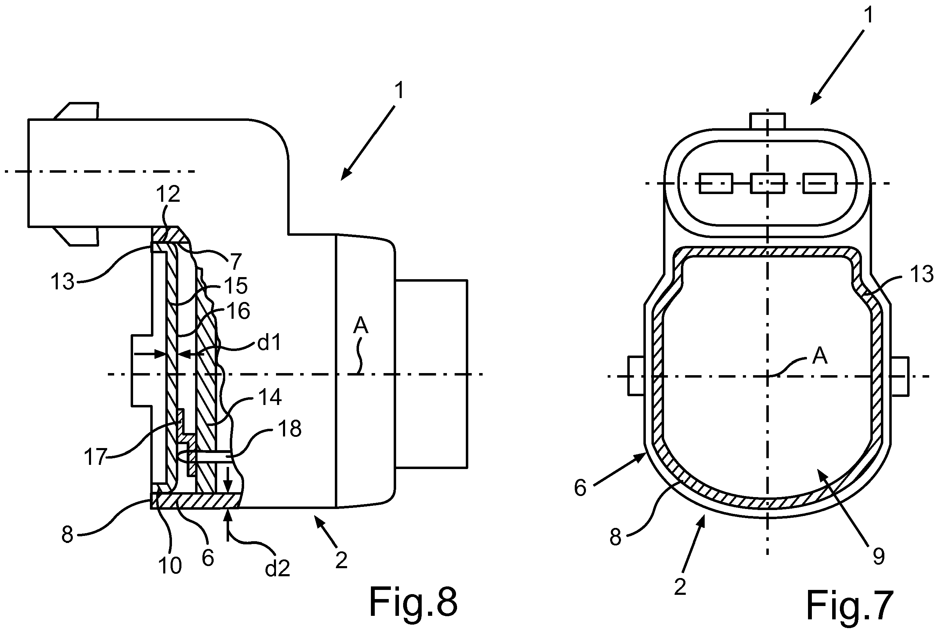

In Fig. 7 ist in einer schematischen Rückansicht ein weiteres Ausführungsbeispiel eines Ultraschallsensors 1 gezeigt. Dieser Ultraschallsensor 1 ist grundsätzlich derart aufgebaut, wie in dem Ausführungsbeispiel zu Fig. 3 und Fig. 4 erläutert.

Die Folie 9 ist aus Kunststoff ausgebildet und auf ihrer Innenseite 15 mit einem metallischen Material versehen. Das metallische Material kann beispielsweise eine Beschichtung sein und ist vorzugsweise eine Klebefolie 16, die beispielsweise eine Kupferfolie sein kann. Darüber hinaus ist ein elektrisches Kontaktelement 17 vorgesehen, welches mit der metallischen Klebefolie 16 elektrisch kontaktiert ist. Im Ausführungsbeispiel ist die Ausgestaltung des elektrischen Kontaktelements 17 in der Schnittdarstellung gemäß Fig. 8 gewinkelt ausgeführt. Dieses elektrische Kontaktelement 17 kann aus metallischem Material sein oder ein Kunststoffträger sein, der außenseitig metallisch beschichtet ist. Das elektrische Kontaktelement 17 ist darüber hinaus mit einem Massekontakt 18 des Schaltungsträgers 14 elektrisch verbunden.

Insbesondere ist dabei das elektrische Kontaktelement 17 auf den Massekontakt 18 aufgesteckt. Es kann hier zur Ausgestaltung eine Schneit-Klemm-Technik vorgesehen sein.

Durch die spezifische Formgebung des elektrischen Kontaktelements 17 kann auch zugleich ein mechanisch stabiles Distanzelement zwischen der Folie 15 mit der metallischen Folie 16 und der Leiterplatte bzw. dem Schaltungsträger 14 geschaffen werden. Wie zu erkennen ist, liegt das elektrische Kontaktelement 17 auch großflächig an einer Seite des Schaltungsträgers 14 an.

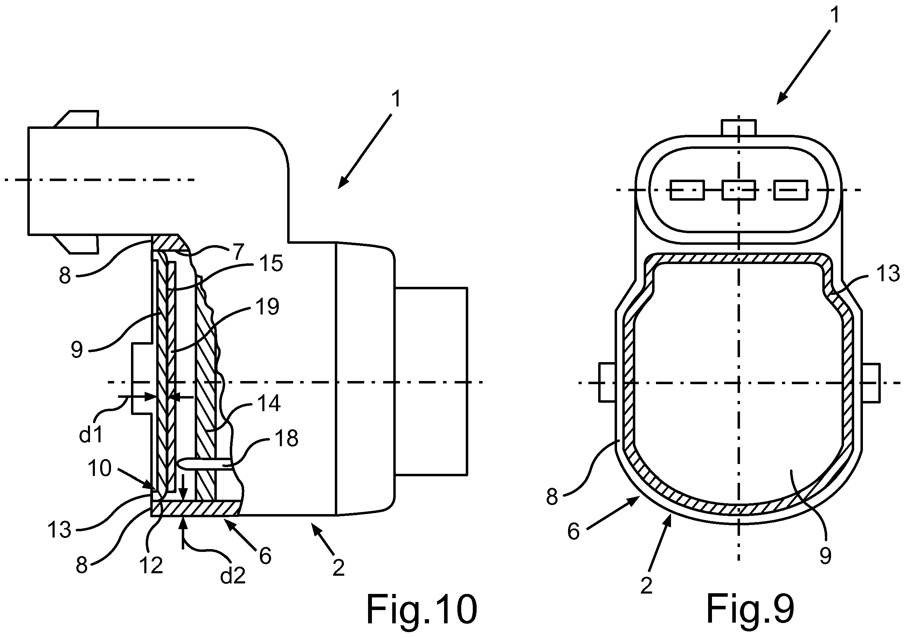

In Fig. 9 ist ein weiteres Ausführungsbeispiel eines Ultraschallsensors 1 mit schematischer rückseitiger Betrachtung dargestellt.

Auch hier ist die Grundausgestaltung des Ultraschallsensors 1 analog zur Ausführung in Fig. 3 und Fig. 4 im Hinblick auf die Anbringung der Folie 9 und deren Positionierung.

Zusätzlich ist hier vorgesehen, dass auf der Innenseite 15 der Folie 9 ein Schwingungsdämpfungselement 19 befestigt ist, insbesondere angeklebt ist. Das Schwingungsdämpfungselement 19 kann beispielsweise ein Filzmaterial sein.

Im Hinblick auf die einzelnen Ausgestaltungen der Ausführungsbeispiele kann dieses Schwingungsdämpfungselement 19 auch bei allen anderen Ausführungen vorgesehen sein. In diesem Zusammenhang kann auch eine Kombination mit der Anbringung der metallischen Folie 16 vorgesehen sein, wobei diesbezüglich beispielsweise die metallische Folie 16 und das Schwingungsdämpfungselement 19 an unterschiedlichen Stellen der Innenseite 15 aufgebracht sein können.

Bei den hier vorgesehenen Ausführungen ist die Abdeckung bildende Folie 9 aus Kunststoff. Es kann auch vorgesehen sein, dass diese Folie 9 vollständig aus einem metallischen Material ausgebildet ist und als Tiefziehbauteil realisiert ist. Bei einer derartigen Ausgestaltung ist es dann nicht mehr erforderlich, dass zusätzlich eine metallische Folie 16 auf die Innenseite 15 aufgebracht wird. Im Hinblick auf die Erzeugung der elektromagnetischen Abschirmung kann dann direkt eine Verbindung mit dem Massekontakt 18 oder eine Verbindung der Innenseite 15 über ein elektrisches Kontaktelement 17 mit dem Massekontakt 18 realisiert sein. Auch hier kann dann an entsprechenden Stellen auf der Innenseite 15 ein Schwingungsdämpfungselement 19 angeordnet sein.

## Patentansprüche

1. Ultraschallsensor, insbesondere für ein Fahrzeug, mit einem topfförmigen Membrangehäuse (2) und einem Deckel (9), durch welchen das Membrangehäuse (2) rückseitig abgedeckt ist,
**dadurch gekennzeichnet, dass** der Deckel eine mit einem metallischen Bereich ausgebildete Folie (9) ist, die mit einem Massekontakt eines Schaltungsträgers, der in dem topfförmigen Membrangehäuse angeordnet ist, elektrisch verbunden ist.

2. Ultraschallsensor nach Anspruch 1,
**dadurch gekennzeichnet, dass**
die Folie (9) an das Membrangehäuse (2) angeschweißt ist, insbesondere durch Laserschweißen oder Ultraschallschweißen.

3. Ultraschallsensor nach Anspruch 2,
**dadurch gekennzeichnet, dass**
die Folie (9) an einer Innenseite (7) eines Hohlkörpers (6) des Membrangehäuse (2) befestigt ist, insbesondere angeschweißt ist.

4. Ultraschallsensor nach Anspruch 3,
**dadurch gekennzeichnet, dass**
die Folie (9) an den Außenrändern (11) einen in axialer Richtung (A) gebogenen Bereich (10) aufweist, dessen Außenseite (12) mit der Innenseite (7) des Hohlkörpers (6) verbunden ist.

5. Ultraschallsensor nach Anspruch 4,
**dadurch gekennzeichnet, dass**
die gebogenen Bereiche (10) von einem durch den Hohlkörper (6) gebildeten Hohlraum (5) axial abgewandt nach außen orientiert sind und im zusammengebauten Zustand des Sensors (1) Seitenränder (13) bündig mit endseitigen Seitenrändern (8) des Hohlkörpers (6) angeordnet sind.

6. Ultraschallsensor nach einem der vorhergehenden Ansprüche,
**dadurch gekennzeichnet, dass**
die Folie (9) dünner ist als die Wanddicke (d2) eines an die Folie (9) angrenzenden Hohlkörpers (6) des Membrangehäuse (2) .

7. Ultraschallsensor nach einem der vorhergehenden Ansprüche,
**dadurch gekennzeichnet, dass**
die Folie (9) aus Kunststoff ist.

8. Ultraschallsensor nach Anspruch 7,
**dadurch gekennzeichnet, dass**
auf einer Innenseite (15) der Folie (9) ein metallisches Material (16) angeordnet ist.

9. Ultraschallsensor nach Anspruch 8,
**dadurch gekennzeichnet, dass**
das metallische Material als Beschichtung aufgebracht ist oder eine metallische Folie (16), insbesondere Kupferfolie, ist, die auf die den Deckel bildende Folie (9) aufgeklebt ist.

10. Ultraschallsensor nach einem der Ansprüche 1 bis 6,
**dadurch gekennzeichnet, dass**
die den Deckel bildende Folie (9) als metallisches Bauteil ausgebildet ist, insbesondere ein tiefgezogenes Bauteil ist.

11. Ultraschallsensor nach einem der Ansprüche 7 bis 10, **dadurch gekennzeichnet, dass**
an der Innenseite (15) der Folie (9) eine elektrisches Kontaktelement (17) zur Verbindung mit dem Massekontakt (18) ausgebildet ist.

12. Ultraschallsensor nach Anspruch 11, **dadurch gekennzeichnet, dass** das elektrische Kontaktelement (17) auf den Massekontakt (18) aufgesteckt ist.

13. Ultraschallsensor nach einem der vorhergehenden Ansprüche, **dadurch gekennzeichnet, dass** auf der Innenseite (15) der Folie (9) ein Schwingungsdämpfungselement (19) angeordnet ist.

14. Fahrzeug mit einem Ultraschallsensor (1) nach einem der vorhergehenden Ansprüche.

## Claims

1. Ultrasonic sensor, in particular for a vehicle, having a pot-shaped membrane housing (2) and a lid (9) by which the membrane housing (2) is covered at the rear,
**characterized in that**
the lid is a film (9), which is formed with a metallic region and is electrically connected to an earth contact of a circuit carrier which is arranged in the pot-shaped membrane housing.

2. Ultrasonic sensor according to Claim 1,
**characterized in that**
the film (9) is welded on the membrane housing (2), in particular by laser welding or ultrasonic welding.

3. Ultrasonic sensor according to Claim 2,
**characterized in that**
the film (9) is fastened on an inner side (7) of a hollow body (6) of the membrane housing (2), in particular is welded on.

4. Ultrasonic sensor according to Claim 3,
**characterized in that**
the film (9) has at the outer edges (11) a region (10) which is bent in the axial direction (A) and the outer side (12) of which is connected to the inner side (7) of the hollow body (6).

5. Ultrasonic sensor according to Claim 4,
**characterized in that**
the bent regions (10) are oriented such that they are facing outwards axially away from a hollow space (5) formed by the hollow body (6) and, in the assembled state of the sensor (1), side edges (13) are arranged flush with end side edges (8) of the hollow body (6).

6. Ultrasonic sensor according to one of the preceding claims,
**characterized in that**
the film (9) is thinner than the wall thickness (d2) of a hollow body (6) of the membrane housing (2) that is adjacent to the film (9).

7. Ultrasonic sensor according to one of the preceding claims,
**characterized in that**
the film (9) is made of plastic.

8. Ultrasonic sensor according to Claim 7,
**characterized in that**
a metallic material (16) is arranged on an inner side (15) of the film (9).

9. Ultrasonic sensor according to Claim 8,
**characterized in that**
the metallic material is applied as a coating or is a metallic film (16), in particular a copper film, that is adhesively attached to the film (9) forming the lid.

10. Ultrasonic sensor according to one of Claims 1 to 6,
**characterized in that**
the film (9) forming the lid is formed as a metallic component, in particular as a deep-drawn component.

11. Ultrasonic sensor according to one of Claims 7 to 10,
**characterized in that**
an electrical contact element (17) is formed on the inner side (15) of the film (9) for the connection to the earth contact (18).

12. Ultrasonic sensor according to Claim 11,
**characterized in that**
the electrical contact element (17) is fitted on the earth contact (18).

13. Ultrasonic sensor according to one of the preceding claims,
**characterized in that**
a vibration damping element (19) is arranged on the inner side (15) of the film (9).

14. Vehicle with an ultrasonic sensor (1) according to one of the preceding claims.

## Revendications

1. Capteur à ultrasons, en particulier pour un véhicule, présentant un boîtier (2) à membrane en forme de cuvette et un couvercle (9) qui couvre l'arrière du boîtier (2) à membrane,
**caractérisé en ce que**
le couvercle est une feuille (9) configurée avec une partie métallique reliée électriquement à un contact de masse d'un support de circuit disposé dans le boîtier à membrane en forme de cuvette.

2. Capteur à ultrasons selon la revendication 1,
**caractérisé en ce que** la feuille (9) est soudée sur le boîtier (2) à membrane, en particulier par soudage au laser ou par soudage à ultrasons.

3. Capteur à ultrasons selon la revendication 2,
**caractérisé en ce que** la feuille (9) est fixée et en particulier soudée sur un côté intérieur (7) d'un corps creux (6) du boîtier (2) à membrane.

4. Capteur à ultrasons selon la revendication 3,
**caractérisé en ce que** sur les bords extérieurs (11), la feuille (9) présente une partie (10) courbée dans la direction axiale (A) et dont le côté extérieur (12) est relié au côté intérieur (7) du corps creux (6).

5. Capteur à ultrasons selon la revendication 4,
**caractérisé en ce que** les parties courbées (10) sont orientées vers l'extérieur et tournent le dos axialement à l'espace creux (5) formé par le corps creux (6) et **en ce que** lorsque le capteur (1) est assemblé, les bords latéraux (13) sont disposés à chant par rapport aux bords latéraux (8) d'extrémité du corps creux (6).

6. Capteur à ultrasons selon l'une des revendications précédentes, **caractérisé en ce que** la feuille (9) est plus mince que l'épaisseur (d2) de la paroi d'un corps creux (6) du boîtier (2) à membrane adjacent à la feuille (9).

7. Capteur à ultrasons selon l'une des revendications précédentes, **caractérisé en ce que** la feuille (9) est réalisée en matière synthétique.

8. Capteur à ultrasons selon la revendication 7,
**caractérisé en ce qu'**un matériau métallique (16) est disposé sur le côté intérieur (15) de la feuille (9).

9. Capteur à ultrasons selon la revendication 8,
**caractérisé en ce que** le matériau métallique est appliqué sous la forme d'un revêtement ou est une feuille métallique (16), en particulier une feuille de cuivre collée sur la feuille (9) qui forme le couvercle.

10. Capteur à ultrasons selon l'une des revendications 1 à 6, **caractérisé en ce que** la feuille (9) qui forme le couvercle est configurée comme composant métallique et en particulier est un composant embouti.

11. Capteur à ultrasons selon l'une des revendications 7 à 10, **caractérisé en ce qu'**un élément (17) de contact électrique est formé sur le côté intérieur (15) de la feuille (9) pour assurer la liaison avec un contact de masse (18).

12. Capteur à ultrasons selon la revendication 11,
**caractérisé en ce que** l'élément (17) de contact électrique est enfiché sur le contact de masse (18).

13. Capteur à ultrasons selon l'une des revendications précédentes, **caractérisé en ce qu'**un élément (19) d'amortissement des vibrations est disposé sur le côté intérieur (15) de la feuille (9).

14. Véhicule doté d'un capteur (1) à ultrasons selon l'une des revendications précédentes.
